(19) Europäisches Patentamt / European Patent Office / Office européen des brevets

(11) **EP 4 202 187 A1**

(12) **EUROPEAN PATENT APPLICATION**

(43) Date of publication:
**28.06.2023 Bulletin 2023/26**

(21) Application number: **22209247.0**

(22) Date of filing: **24.11.2022**

(51) International Patent Classification (IPC):
**F01D 5/30** *(2006.01)*

(52) Cooperative Patent Classification (CPC):
**F01D 5/3007;** F01D 5/3015; F01D 5/323;
F05D 2220/36; F05D 2260/37; F05D 2300/501;
F05D 2300/505; F05D 2300/509

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2021 GB 202118890**

(71) Applicant: **Rolls-Royce plc**
**London N1 9FX (GB)**

(72) Inventors:
- **Karapurath, Neelambaran**
  **Derby, DE24 8BJ (GB)**
- **Lambourne, Alexis**
  **Derby, DE24 8BJ (GB)**
- **Glover, Neil**
  **Derby, DE24 8BJ (GB)**

(74) Representative: **Rolls-Royce plc**
**Intellectual Property Dept SinA-48**
**PO Box 31**
**Derby DE24 8BJ (GB)**

(54) **BLADED DISC FOR A ROTATING MACHINE, GAS TURBINE ENGINE AND METHOD OF REDUCING THE LOW-CYCLE FATIGUE OF A BLADE WITHIN A BLADED GAS TURBINE ENGINE**

(57) A bladed disc for a rotating machine comprises a central disc (802) that rotates about a central axis (9). The central disc has a series of blades (401; 801) arranged around its periphery. The blades (401; 801) have dovetail roots (402) which engage with slots on the central disc (802). The bladed disc is configured so that there is a pre-loading force between the blades (401; 801) and the central disc (802) such that each blade (401; 801) is forced away from the central axis (9) of the bladed disc. The pre-loading force is equal or greater than 40% of the maximum centrifugal force applied to the blade (401; 801) during a flight cycle.

A gas turbine engine comprises such a bladed disc.

A method of reducing the low cycle fatigue of a blade (401; 801) within a bladed gas turbine engine comprises: inserting a shaped blade (401; 801) into a corresponding slot on a disc (802) of a gas turbine engine, and inserting a shim between the shaped blade (401; 801) and the disc (802), so as to force the blade (401; 801) away from the centre of the disc (802) of the gas turbine engine. The shim is inserted so that it produces a force between 40% and 100% of the maximum centrifugal force applied to the blade (401; 801) during a flight cycle.

*FIG. 4*

**(Cont. next page)**

FIG. 5B

FIG. 8A

FIG. 8B

**Description**

**Field of the Disclosure**

The present disclosure relates to a bladed disc and a method of mounting blades to a disc for use in a turbine engine.

**Background of the Disclosure**

The design of a turbine blade root fixture is very important as they carry the high centrifugal and aerodynamic loads as well as being able to tolerate vibration and cycling during normal operation in service. A known method of connecting a turbine and/or a compressor blade to a mounting disc is through the use of cooperating fir tree or dovetail profiles. Such profiles are frusto-conical in shape with the blade being provided with a single or series of protrusions that engage with respective indentations which are machined into the profile of the disc itself. This can be a single protrusion in the case of a dovetail to having multiple protrusions in the case of a fir tree. This design remains the most popular due to its low weight and small manufacturing cost. The profiles on both the blade and the disc need to be strong enough to withstand the radial centrifugal forces that apply outwardly on the blade and force it into the disc as it is rotating during operation. Due to the shape of the profiles, the flanks of the fir tree profiles that face away from the central axis of the engine support the blades against radially outward movement; these can be regarded as loaded flanks. Opposing these are flanks that are unloaded as they do not support any significant radial force in operation. The profiles of the flanks are provided with transition regions, which are alternately convex surfaces - which are usually, but not always, arcuate and are referred to as fillets - and concave surfaces - that are usually, but not always, arcuate and are commonly known as corners.

An issue with this means of connecting the blades to the discs is the stress cycle fatigue that the blades undergo. This fatigue can result in cracks and damage to the blade which increases the cost of servicing the bladed discs as well as reducing the lifetimes of the components. It is therefore desirable to reduce this stress cycle fatigue on the blades.

**Summary of the Disclosure**

According to a first aspect there is provided a bladed disc for a rotating machine comprising a central disc that rotates about a central axis, the central disc having a series of blades arranged around its periphery; the blades have dovetail roots which engage with slots on the central disc; the bladed disc being configured so that there is a pre-loading force between the blades and the central disc such that each blade is forced away from the central axis of the bladed disc; and wherein the pre-loading force is equal or greater than 40% of the maximum centrifugal force applied to the blade during a flight cycle.

The pre-loading force may be from 60 to 100% of the maximum centrifugal force applied to the blade during the flight cycle.

The pre-loading force may be applied by the insertion of a shim between the blades and the disc within the slot and configured so that the shim forces the blade away from the centre of blade.

The shim may have a dry film lubricant coating.

The pre-loading force may be the result of a deformation of a shape memory alloy.

The pre-loading force may be the result of a taper being applied to the blade and/or the central disc.

The taper may be present on the leading edge and the trailing edge such that the centre of the blade and/or the central disc protrudes beyond the leading edge and the trailing edge.

The blade may be further retained by a locking plate.

According to a second aspect there is provided a method of reducing the low cycle fatigue of a blade within a bladed gas turbine engine, comprising;

Inserting a shaped blade into a corresponding slot on a disc of a gas turbine engine, and inserting a shim between the shaped blade and the disc, so as to force the blade away from the centre of the disc of the gas turbine engine.

The shim may be inserted so that produces a force between 40% and 100% of the maximum centrifugal force applied to the blade during a flight cycle.

According to a third aspect there is provided a gas turbine engine comprising a bladed disc as presented above.

The gas turbine engine may be a geared gas turbine engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge.

The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 $Nkg^{-1}s$, 105 $Nkg^{-1}s$, 100 $Nkg^{-1}s$, 95 $Nkg^{-1}s$, 90 $Nkg^{-1}s$, 85 $Nkg^{-1}s$ or 80 $Nkg^{-1}s$. The specific thrust may be in an inclusive range bounded by any two of the values in the previous sentence (i.e. the values may form upper or lower bounds), for example in the range of from 80 $Nkg^{-1}s$ to 100 $Nkg^{-1}s$, or 85 $Nkg^{-1}s$ to 95 $Nkg^{-1}s$. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160 kN, 170 kN, 180 kN, 190 kN, 200 kN, 250 kN, 300 kN, 350 kN, 400 kN, 450 kN, 500 kN, or 550 kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330 kN to 420 kN, for example 350 kN to 400 kN. The thrust referred to above may be the maximum net thrust at standard atmospheric conditions at sea level plus 15 degrees C (ambient pressure 101.3 kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400 K, 1450 K, 1500 K, 1550 K, 1600 K or 1650 K. The TET at cruise may be in an inclusive range bounded by any two of the values in the previous sentence (i.e. the values may form upper or lower bounds). The maximum TET in use of the engine may be, for example, at least (or on the order of) any of the following: 1700 K, 1750 K, 1800 K, 1850 K, 1900 K, 1950 K or 2000 K. The maximum TET may be in an inclusive range bounded by any two of the values in the previous sentence (i.e. the values may form upper or lower bounds), for example in the range of from 1800 K to 1950 K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance-between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example, where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to an operating point of the engine that provides a known required thrust level (for example a value in the range of from 30 kN to 35 kN) at a forward Mach number of 0.8 and standard atmospheric conditions (according to the International Standard Atmosphere) at an altitude of 38000 ft (11582 m). Purely by way of further example, the cruise conditions may correspond to an operating point of the engine that provides a known required thrust level (for example a value in the range of from 50 kN to 65 kN) at a forward Mach number of 0.85 and standard atmospheric conditions (according to the International Standard Atmosphere) at an altitude of 35000 ft (10668 m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

**Brief Discussion of the Drawings**

Embodiments will now be described by way of example only, with reference to the Figures, in which:

**Figure 1** is a sectional side view of a gas turbine engine;

**Figure 2** is a close up sectional side view of an upstream portion of a gas turbine engine;

**Figure 3** is a partially cut-away view of a gearbox for a gas turbine engine;

**Figure 4** presents an example of a typical dovetail joint;

**Figure 5a** shows the force diagram and the resultant forces associated with the flight cycle for the unloaded blade in a static state, and **Figure 5b** shows the same for the case of the pre-loaded blade in a static state;

**Figure 6a** shows the force diagram and the resultant forces associated with the flight cycle for the unloaded blade in a rotating state, and **Figure 6b** shows the same for the case of the pre-loaded blade in a rotating state;

**Figure 7a** shows the stress cycle at the edge of bedding for an unloaded blade according to the prior art over a number of flights and **Figure 7b** shows the stress cycle at the edge of bedding for a pre-loaded blade according to the present disclosure;

**Figure 8a** shows a means of applying the force via the use of a shim, and **Figure 8b** shows a means of applying force through the use of a shape memory alloy;

**Figure 9** is a graph showing the effect of preloading of the blade against the equivalent flight cycle stress reduction.

**Detailed Description**

Aspects and embodiments of the present disclosure will now be discussed with reference to the accompanying drawings. Further aspects and embodiments will be apparent to those skilled in the art.

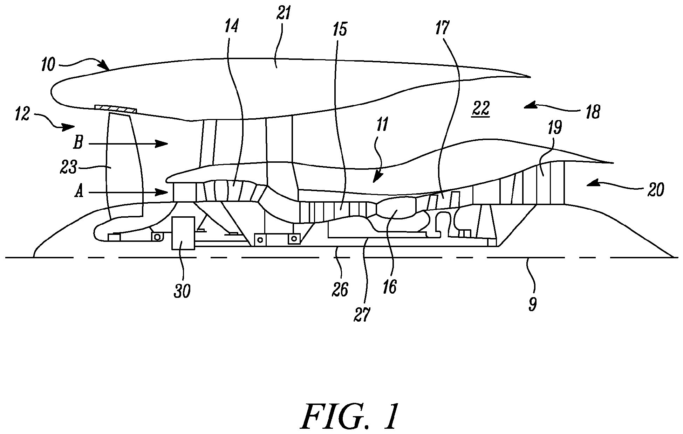

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

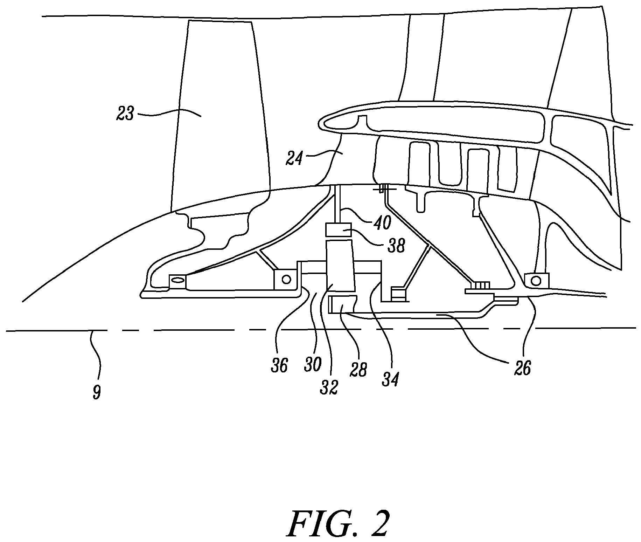

An exemplary arrangement for a geared fan gas turbine engine 10 is shown in **Figure 2.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

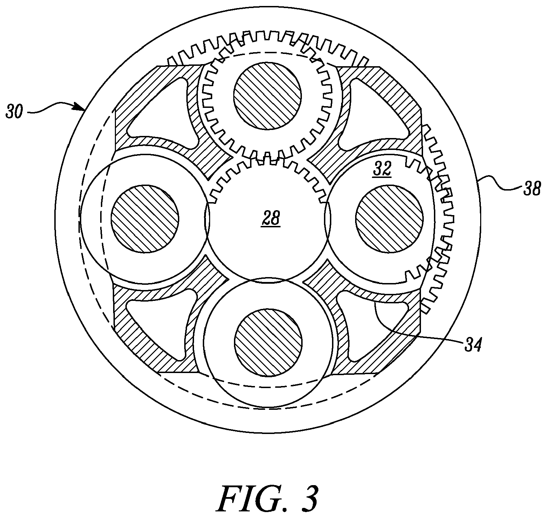

The epicyclic gearbox 30 is shown by way of example in greater detail in **Figure 3.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

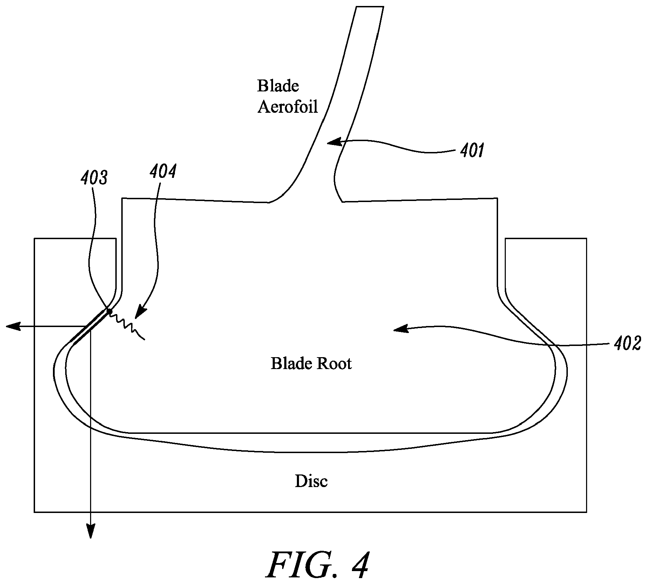

Gas turbine blades 401 need to meet several mechanical integrity requirements of which Low Cycle Fatigue (LCF) life is one. Low cycle fatigue typically results from cycles of operation i.e., from the run up and run down of the engine during its operational service life. It is, therefore, desirable to reduce the LCF. One significant area for LCF comes from the dovetails 402 style blade root design, which has a typical failure location at the edge of bedding (EoB) 403; this is located to the upper end of the contact flank as shown in Figure 4. It is from this location where cracks 404 typically initiate and propagate as a result of LCF. The reason for the cracking in this location is because the EoB location experiences very high stresses during the engine operation owing to the local geometry and contact effects. Furthermore, the disc slot width dilates during run up due to the centrifugal forces and contracts back to its original length during run down which leads to the blade root slipping on the contact flank. This repeated relative slipping of the blade root within the disc slot causes fretting damage along the contact flank which further makes the EoB vulnerable to cracking.

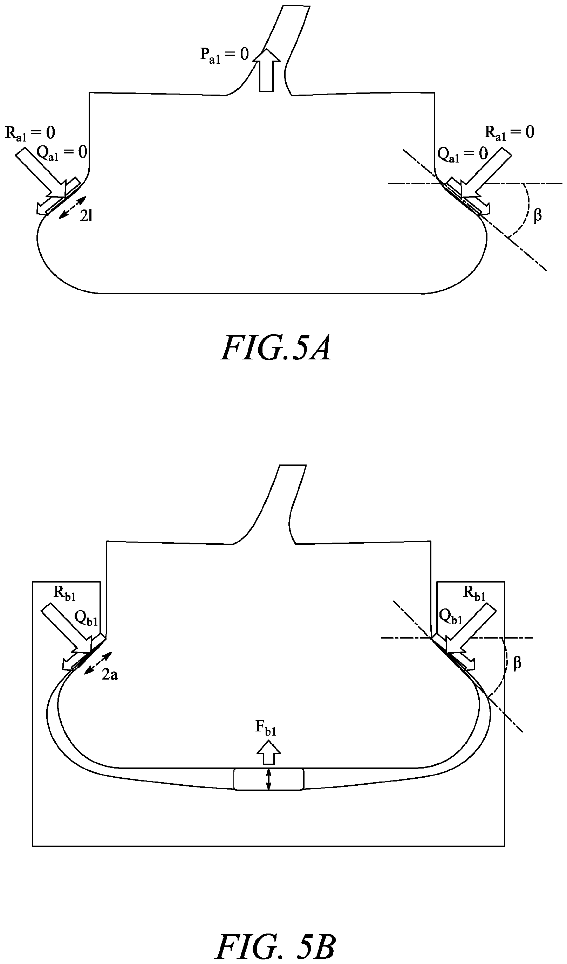

The mounting of the blades to the discs are shown in Figures 5a and 5b. **Figure 5a** demonstrates the case for a prior art example that is unloaded. **Figure 5b** on the other hand demonstrates the case for a blade having a pre-loaded force applied to it according to the present disclosure. Figure 5a and 5b present the case in which the blades are stationary, and as such there is no centrifugal force acting on the blade. In Figure 5a whilst the blade is static there is no normal reaction force $R_{a1}$ on the loaded flanks of the blades, and there is no centrifugal force on the blade. There is also no frictional force $Q_{a1}$. In the static situation as shown in Figure 5b, a force is applied to the base of the blade $F_{b1}$ and the opposing force is applied to the disc. This force results in the normal reaction force $R_{b}1$ being applied the loading flank of the blade. There is also a frictional force $O_{b1}$.

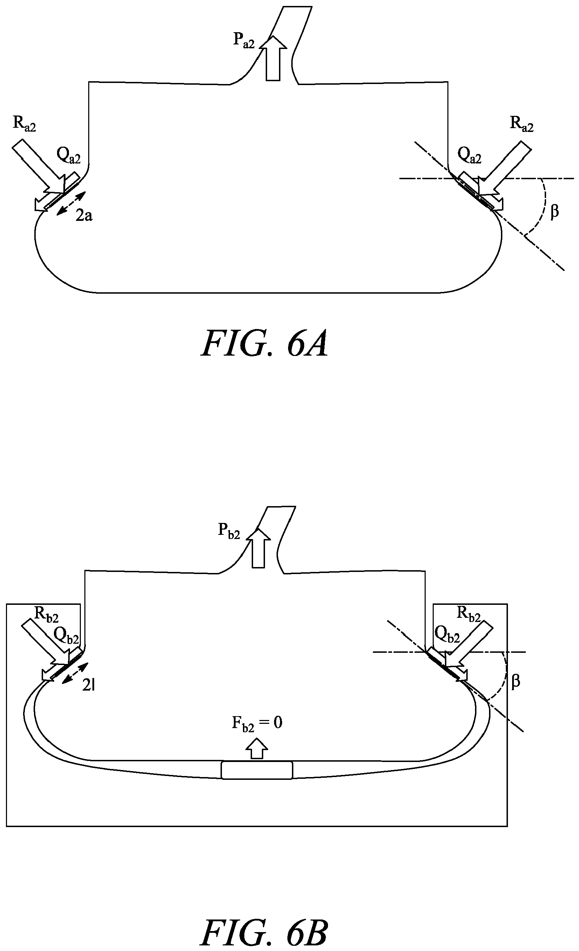

Figure 6a presents the forces acting on a prior art blade whist it is rotating, and centrifugal force is present. When the blade is rotating a reactionary force $R_{a2}$ is applied to the flank of the blade along with a frictional force $Q_{a2}$ and a centrifugal load $P_{a2}$. Figure 6b presents the same for the present disclosure in which a force is pre applied to the blade. When the blade is in operation and the disc is rotating then a normal reaction force $R_{b2}$ is applied to the loading flank of the blade, due to the centrifugal force $P_{b2}$. There is also the presence of small frictional force $Q_{b2}$.

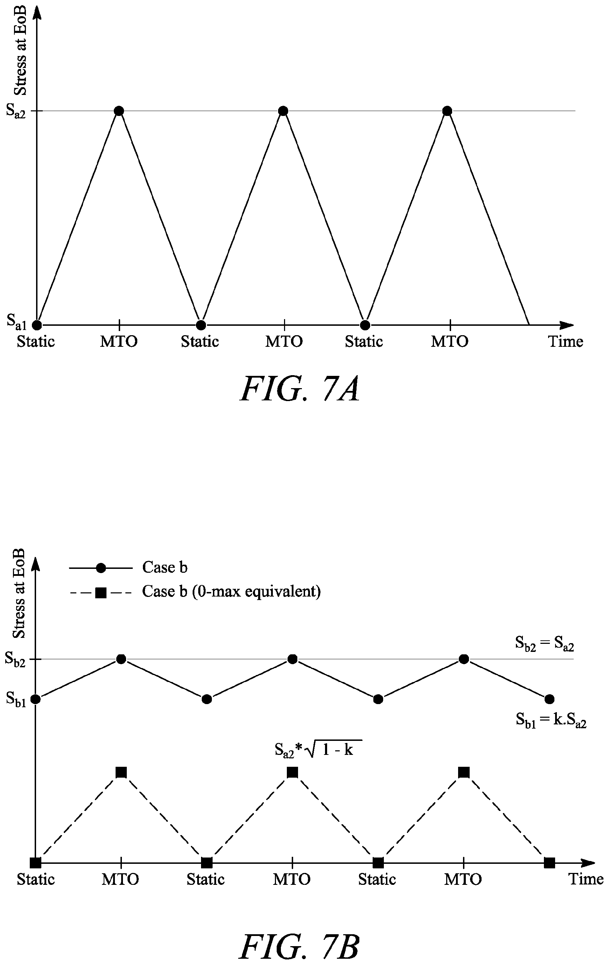

Figure 7a presents a graph of an example of the stress at the edge of bedding for the prior art example. Figure 7b presents the stress at the edge of bedding for the blade having a preloaded force applied to it according to the present disclosure. The stress at the EoB in the pre-loaded example changes at a much smaller rate between $S_{b1}$ and $S_{b2}$ than cycling between $S_{a1}$ and $S_{a2}$, which is the case in the unloaded example shown in Figure 7a. The effect of the pre-loading is that although the peak stress during operation increases by a small amount over what is observed without the pre-loading the degree of stress cycling on the blade is less as the blade does not return to 0 stress but remains at its pre-loaded amount. As such, the degree of cycle stress within the blade is reduced; this consequently will reduce the low cycle fatigue experienced by the blade and the disc. This reduction is seen in both the leading and trailing edges as well as along the flanks on both blade and disc. The bladed disc of the present disclosure also has the advantage of reducing the blade root flank slips and as such also protects the blade root contact surface.

Mathematically, the situations presented in figures 5a and 5b can be considered as the following: the situation can be simplified by considering the case as a 2D section of a dovetail geometry; thus, not accounting for the minor differences that are present due to the 3D effects. Although this is presented for a dovetail the same would apply to a firtree geometry. Further, by ignoring the aerodynamic loads as secondary, and therefore a minor issue, as LCF is dominated by centrifugal force the problem can be simplified. A further simplification of the physics at cause is to let the complex flight cycle, where the engine goes through several speed ranges and dwell during a typical flight, be simplified to a 0 to max RPM cycle. Therefore, we can present the example as set out in figure 5a as:

Under static conditions i.e., at zero RPM, the blade root does not experience any centrifugal loads and the blade does not experience any significant stress in the root EOB location.

$$P_{a1}=0 \hspace{8cm} \text{Eq1}$$

$$S_{a1}=0 \hspace{8cm} \text{Eq2}$$

Then as the engine runs up to max revolutions (MTO), the blade experiences a centrifugal force given by:-

$$P_{a2} = m * r * w_2^2 \qquad\qquad Eq3$$

At equilibrium, the contact forces (reaction force and friction force) on both the flanks resist the centrifugal force as shown in Figure 2 where:-

$$P_{a2} = 2(R_{a2} * \cos\beta + Q_{a2} * \sin\beta) = 2R_{a2}(\cos\beta + \mu * \sin\beta). \qquad Eq4 \qquad \{as\ Q_{a2} = R_{a2} * \mu\}$$

The stress at the edge of bedding $S_{a2}$ depends on the forces at the contact and root geometry which can be written as:

$$S_{a2} = R_{a2} * f(a, d, \alpha, \beta, \mu) \qquad\qquad Eq5$$

In the case of the example according to the present disclosure and shown in figure 5b. In this case an insert is incorporated between the blade and the disc; this is designed to exert a preload onto the blade dovetail root which is similar in magnitude to the max centrifugal force.

Under static conditions, we can set the insert to be designed to exert a preload $F_{b1}$ which is k times the Max centrifugal load at build. So, under static condition the insert exerts the preload given by:

$$F_{b1} = k.\ P_{a2} \qquad\qquad [where\ 0.4 < k < 1] \qquad\qquad Eq6$$

Due to the preload exerted by the insert, the blade root now experiences a radially outward force which is resisted by the forces at the contact flank at equilibrium.

$$F_{b1} = 2(R_{b1} * \cos\beta + Q_{b1} * \sin\beta] = 2R_{b1}(\cos\beta + \mu * \sin\beta) \qquad\qquad Eq7$$

This results in EoB stresses even under static conditions. However, as the blade roots typically crack at the EoB and the stresses fall rapidly in magnitude as we move away from the EoB, the edge of bedding stresses determine the LCF life of the root. Therefore, the difference in the stress distribution far field from the EoB is inconsequential WRT the LCF life of the root.

The stress at the edge of bedding $S_{b1}$ depends on the forces at the contact and root geometry which can be written as:

$$S_{b1} = R_{b1} * f(a, d, \alpha, \beta, \mu) \qquad\qquad Eq8$$

$$S_{b1} = k * S_{a2} \qquad\qquad (from\ Eq\ 8,\ 7,\ 6) \qquad\qquad Eq9$$

Mathematically, the situations presented in figures 6a and 6b can be considered as the following: in the second condition of MTO the engine has run up to maximum speed and the centrifugal force on the blade has increased. As a consequence, the preload exerted at the bottom face of the blade root decreases. At max speed the preload is negligible and the total load on the blade is equal to the centrifugal load.

$$F_{b2} = 0 \qquad\qquad Eq10$$

$$P_{b2} = P_{a2} \qquad\qquad Eq11$$

$$R_{b2} = R_{a2} \qquad\qquad Eq12$$

$$S_{b2} = S_{a2} \qquad\qquad\qquad Eq13$$

The reason that the shim is beneficial is that as the engine runs up and runs down during every flight cycle, the EoB stress cycles between $S_{a1}$ & $S_{a2}$ i.e., between 0 to Sa2 which induces low cycle fatigue are shown in the lower images of figures 5a and 5b. In Case of 5b, the EoB stress, cycles between $S_{b1}$ and $S_{b2}$; this is based on Eq 9 and 13 and can be represented as cycling between 'k.$S_{a2}$' to '$S_{a2}$'. In order to allow a back-to-back comparison with the cases as set out in figures 5a and 5b lets convert this cycle to R-ratio of 0 i.e. 0-max equivalent. Using walker stress correction as bellow:

$$S_{b(0\text{-max})} = (S_{a2} - k * S_{a2}) * \left(1 - \frac{k*S_{a2}}{S_{a2}}\right)^{0.5-1} = S_{a2} * \sqrt{1-k} \qquad\qquad Eq14$$

As the LCF life depends on the Stress amplitude and the effective stress amplitude in the example of the present disclosure is significantly lower than that of the prior art. Therefore, the example as presented in figure 5b has a significantly higher LCF life than that of figure 5a.

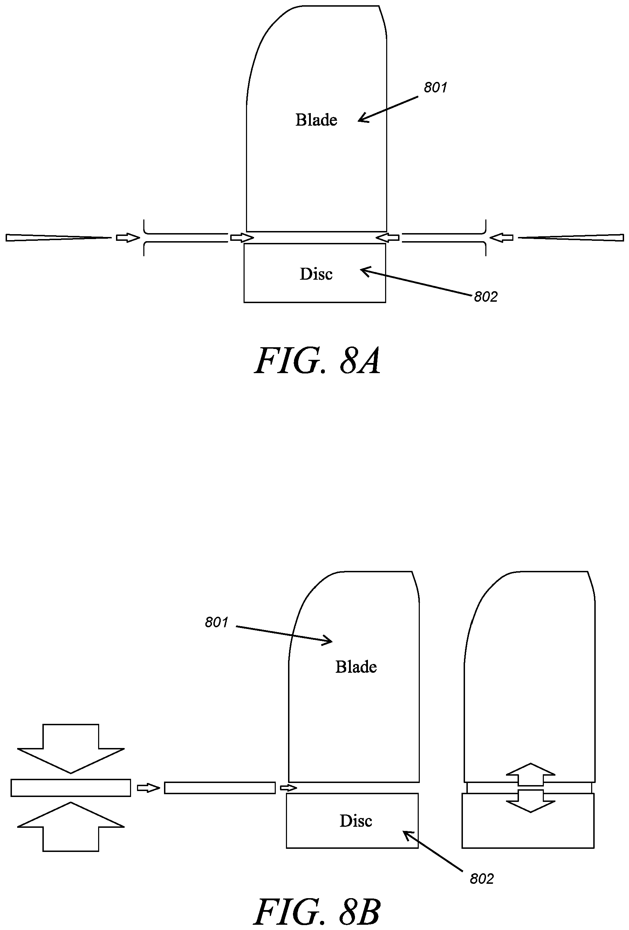

The force may be applied to the blade by the insertion of a wedge or shim into the gap between the blade and the disc, as shown in **Figure 8a.** The shims can be made of steel or any other suitable material. The shims may be coated with a dry film lubricant (DFL). The insertion of the shims into the slot can be done in a number of different ways as would be apparent to the person skilled in the art. For example, the wedges may be hydraulically pressed into the slot. The shim may be applied to either side. Alternatively, the shims can be applied both sides of the blade.

Another means of applying the pre-loading is to use a shape memory alloy (SMA) material, as shown in **Figure 8b.** In order to achieve this, the SMA is cold pressed below its transition temperature point. The SMA remains having its thinner profile and can be forced into the gap between the blade and the disc. When the SMA reaches its transition temperature it expands back to its original shape and creates the pre-loading force. The use of a low temperature SMA means that there will be no changes in the shape of the alloy during flight conditions. Any suitable SMA materials may be used as would be apparent to the person skilled in the art.

An alternative to this is to shape the dovetail or the slot within the disc. This would involve a taper in the profile of one or both of the firtree and/or the slot. This taper would increase the loading on the blade as it is forced into the slot. This taper may be a single taper extending across the width of the slot or the fir tree or the taper mat be on both sides, such that the centre of the slot or the firtree protrudes more than the edges.

The desired pre-load force to be applied to the blade is proportional to maximum centrifugal force during operation of the engine. Any preloading has been found to have a beneficial effect on the low cycle fatigue stress undergone by the component. Nevertheless, desirable results can be achieved for a pre-loading of at least 40% of the maximum centrifugal force applied to the blade during flight cycle. The maximum centrifugal force is determined using equation 3 above. IN this, the maximum revolutions are at take-off (MTO). Increasing the pre-load force will have the desirable effect of further reducing the life cycle fatigue stress on both the blade and the disc. Preferably the load is between 60-100%; this is because as you get closer to 100% the less movement there is of the blade. Pre-loading the blade is also beneficial as it seduces the effect of slippage of the blade and this lack of movement is beneficial to the lifespan of the blade.

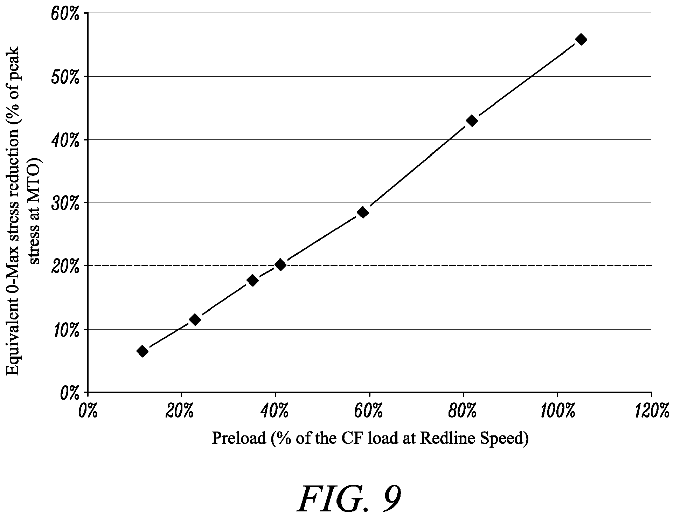

The force applied to blade can be varied to differing effects as shown in **Figure 9** with varying benefit. Here the dashed line represents the benefit of the loading at 40% of the centrifugal load applied to the blade. As can be seen there is a greater benefit as the loading is further increased.

The concept may be applied to any blades used within a rotating machine, such as a turbine engine or turbo machinery. However, it is particularly suited to compressor and turbine blades in a turbine engine. In this case once the blade has been inserted into the disc and the pre-loading has been applied the locking plates or any other further retention devices can be added. It may be necessary to modify the base of the blade or the top of the slot so that the shim or the SMA insert may be inserted between the blade and the disc.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

**Claims**

1. A bladed disc for a rotating machine comprising a central disc that rotates about a central axis, the central disc having a series of blades arranged around its periphery; the blades have dovetail roots which engage with slots on the central disc; the bladed dsc being configured so that there is a pre-loading force between the blades and the central disc such that each blade is forced away from the central axis of the bladed disc; and wherein the pre-loading force is equal or greater than 40% of the maximum centrifugal force applied to the blade during a flight cycle.

2. The bladed disc as claimed in claim 1, wherein the pre-loading force is from 60 to 100% of the maximum centrifugal force applied to the blade during the flight cycle.

3. The bladed disc as claimed in either one of claims 1 or 2, wherein the pre-loading force is applied by the insertion of a shim between the blades and the disc within the slot and configured so that the shim forces the blade away from the centre of blade.

4. The bladed disc as claimed in claim 3, wherein the shim has a dry film lubricant coating.

5. The bladed disc as claimed in claim 1 or 2, wherein the pre-loading force is the result of a deformation of a shape memory alloy.

6. The bladed disc as claimed in claim 1 or 2 wherein the pre-loading force is the result of a taper being applied to the blade and/or the central disc.

7. The bladed disc as claimed in claim 6, wherein the taper is present on the leading edge and the trailing edge such that the centre of the blade and/or the central disc protrudes beyond the leading edge and the trailing edge.

8. The bladed disc as claimed in any one of the preceding claims, wherein the blade is further retained by a locking plate.

9. A method of reducing the low cycle fatigue of a blade within a bladed gas turbine engine, comprising;
Inserting a shaped blade into a corresponding slot on a disc of a gas turbine engine, and inserting a shim between the shaped blade and the disc, so as to force the blade away from the centre of the disc of the gas turbine engine.

10. The method according to claim 9, wherein the shim is inserted so that produces a force between 40% and 100% of the maximum centrifugal force applied to the blade during a flight cycle.

11. A gas turbine engine comprising a bladed disc according to any one of the preceding claims.

12. The gas turbine engine as claimed in claim 11, wherein the gas turbine engine is a geared gas turbine engine.

**FIG. 1**

FIG. 2

## FIG. 3

Blade
Aerofoil

_401_

_403_    _404_

Blade Root                _402_

Disc

## FIG. 4

*FIG.5A*

*FIG. 5B*

$P_{a2}$

$R_{a2}$

$Q_{a2}$

$R_{a2}$

$Q_{a2}$

2a

β

*FIG. 6A*

$P_{b2}$

$R_{b2}$

$Q_{b2}$

$R_{b2}$

$Q_{b2}$

2l

β

$F_{b2} = 0$

*FIG. 6B*

*FIG. 7A*

*FIG. 7B*

Blade  *801*

Disc  *802*

## FIG. 8A

*801*  Blade

Disc  *802*

## FIG. 8B

FIG. 9

Europäisches
Patentamt

European
Patent Office

Office européen
des brevets

# EUROPEAN SEARCH REPORT

Application Number

EP 22 20 9247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 123 813 A (PRZYTULSKI JAMES C [US] ET AL) 23 June 1992 (1992-06-23) * figures * | 1-12 | INV. F01D5/30 |
| X | US 2016/186581 A1 (DIERKSMEIER DOUGLAS D [US] ET AL) 30 June 2016 (2016-06-30) * figures * | 1-12 | |
| X | US 2019/120069 A1 (BURDGICK STEVEN SEBASTIAN [US] ET AL) 25 April 2019 (2019-04-25) * figures * | 1-12 | |
| X | US 2009/060745 A1 (DOUGUET CHARLES JEAN-PIERRE [FR] ET AL) 5 March 2009 (2009-03-05) * paragraph [0029] – paragraph [0031]; figure 1 * | 1-12 | |
| X | EP 2 395 200 A2 (UNITED TECHNOLOGIES CORP [US]) 14 December 2011 (2011-12-14) * paragraph [0005]; figure 7 * | 1-12 | TECHNICAL FIELDS SEARCHED (IPC) |
| X | EP 2 977 547 A1 (UNITED TECHNOLOGIES CORP [US]) 27 January 2016 (2016-01-27) * paragraph [0008]; figure 4 * | 1-12 | F01D |
| X | EP 2 372 095 A1 (SIEMENS AG [DE]) 5 October 2011 (2011-10-05) * paragraph [0033] – paragraph [0040]; figures * | 1-12 | |
| X | DE 32 36 021 A1 (BBC BROWN BOVERI & CIE [CH]) 19 May 1983 (1983-05-19) * figures * | 1-12 | |
| | –/-- | | |

The present search report has been drawn up for all claims

| Place of search | Date of completion of the search | Examiner |
|---|---|---|
| Munich | 16 March 2023 | Raspo, Fabrice |

page 1 of 2

Europäisches
Patentamt

European
Patent Office

Office européen
des brevets

# EUROPEAN SEARCH REPORT

**Application Number**

EP 22 20 9247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/161617 A1 (CHATENET LUC HENRI [FR] ET AL) 12 June 2014 (2014-06-12) * paragraph [0064]; figures * ----- | 1-12 | |
| X | JP S61 129405 A (HITACHI LTD) 17 June 1986 (1986-06-17) * figures * ----- | 1-12 | |
| X | RU 185 519 U1 (BRYANSKIY GOSUDARSTVENNYY TEKHNICHESKIY UNIVERSITET (RU)) 7 December 2018 (2018-12-07) * figures * ----- | 1-12 | |
| X | US 2014/178202 A1 (CHATENET LUC HENRI [FR] ET AL) 26 June 2014 (2014-06-26) * paragraph [0056]; figures * ----- | 1-12 | |
| X | JP H01 237304 A (TOSHIBA CORP) 21 September 1989 (1989-09-21) * figures * ----- | 1-12 | |
| | | | **TECHNICAL FIELDS SEARCHED (IPC)** |

The present search report has been drawn up for all claims

| Place of search | Date of completion of the search | Examiner |
|---|---|---|
| Munich | 16 March 2023 | Raspo, Fabrice |

EPO FORM 1503 03.82 (P04C01)

**EP 4 202 187 A1**

## ANNEX TO THE EUROPEAN SEARCH REPORT
## ON EUROPEAN PATENT APPLICATION NO.

EP 22 20 9247

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2023

| Patent document cited in search report | | Publication date | Patent family member(s) | | Publication date |
|---|---|---|---|---|---|
| US 5123813 | A | 23-06-1992 | NONE | | |
| US 2016186581 | A1 | 30-06-2016 | NONE | | |
| US 2019120069 | A1 | 25-04-2019 | US | 2019120069 A1 | 25-04-2019 |
| | | | WO | 2019083595 A1 | 02-05-2019 |
| US 2009060745 | A1 | 05-03-2009 | CA | 2636922 A1 | 13-01-2009 |
| | | | CN | 101344015 A | 14-01-2009 |
| | | | EP | 2014873 A1 | 14-01-2009 |
| | | | ES | 2352583 T3 | 21-02-2011 |
| | | | FR | 2918702 A1 | 16-01-2009 |
| | | | JP | 2009019629 A | 29-01-2009 |
| | | | UA | 96589 C2 | 25-11-2011 |
| | | | US | 2009060745 A1 | 05-03-2009 |
| EP 2395200 | A2 | 14-12-2011 | EP | 2395200 A2 | 14-12-2011 |
| | | | US | 2011305576 A1 | 15-12-2011 |
| EP 2977547 | A1 | 27-01-2016 | EP | 2977547 A1 | 27-01-2016 |
| | | | US | 2016024946 A1 | 28-01-2016 |
| EP 2372095 | A1 | 05-10-2011 | NONE | | |
| DE 3236021 | A1 | 19-05-1983 | CH | 655547 B | 30-04-1986 |
| | | | DE | 3236021 A1 | 19-05-1983 |
| US 2014161617 | A1 | 12-06-2014 | BR | 112014001381 A2 | 14-02-2017 |
| | | | CA | 2842088 A1 | 07-02-2013 |
| | | | CN | 103717840 A | 09-04-2014 |
| | | | EP | 2739828 A1 | 11-06-2014 |
| | | | FR | 2978796 A1 | 08-02-2013 |
| | | | RU | 2014107840 A | 10-09-2015 |
| | | | US | 2014161617 A1 | 12-06-2014 |
| | | | WO | 2013017805 A1 | 07-02-2013 |
| JP S61129405 | A | 17-06-1986 | NONE | | |
| RU 185519 | U1 | 07-12-2018 | NONE | | |
| US 2014178202 | A1 | 26-06-2014 | BR | 112013026763 B1 | 15-06-2021 |
| | | | CA | 2833098 A1 | 22-11-2012 |
| | | | CN | 103534443 A | 22-01-2014 |
| | | | EP | 2710229 A1 | 26-03-2014 |
| | | | FR | 2975428 A1 | 23-11-2012 |
| | | | RU | 2013155915 A | 27-06-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 22 20 9247

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2023

| Patent document cited in search report | Publication date | Patent family member(s) | | Publication date |
|---|---|---|---|---|
| | | US 2014178202 A1 | | 26-06-2014 |
| | | WO 2012156633 A1 | | 22-11-2012 |
| JP H01237304 A | 21-09-1989 | NONE | | |

For more details about this annex : see Official Journal of the European Patent Office, No. 12/82

EPO FORM P0459